# EUROPEAN PATENT APPLICATION

(11) **EP 4 269 356 A1**
(43) Date of publication of application: **01.11.2023**
(21) Application number: 21910712.5
(22) Date of filing: 20.12.2021
(51) Int. Cl.: C01G 41/00, C08L 33/06, C08L 69/00, C08L 101/00, C09K 3/00, C08K 3/22

(54) **HEAT RAY-BLOCKING RESIN SHEET MATERIAL**

(30) Priority: 24.12.2020 JP 2020215131
(71) Applicant: SUMITOMO METAL MINING CO., LTD., Tokyo 105-8716 (JP)
(72) Inventor: NOSHITA, Akinari, Isa-shi, Kagoshima 895-2501 (JP); CHONAN, Takeshi, Isa-shi, Kagoshima 895-2501 (JP)
(74) Representative: Jones, Nicholas Andrew
(86) International application number: PCT/JP2021/047048
(87) International publication number: WO 2022/138568

(57) **Abstract**

Provided is a heat ray shielding resin sheet material including: near infrared absorbing material particles; and a resin, wherein the near infrared absorbing material particles contain particles of a complex tungsten oxide represented by General Formula: MₓW_{y}O_{z} (where an element M is one or more elements selected from H, He, alkali metals, alkaline-earth metals, rare-earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I, 0.001≤x/y≤1, and 3.0<z/y).

## Description

### TECHNICAL FIELD

The present invention relates to a heat ray shielding resin sheet material.

### BACKGROUND OF THE INVENTION

Conventionally, what is called openings, such as windows of various buildings and vehicles, are arranged with transparent glass plates or resin plates to let in sunlight. However, in addition to visible light, ultraviolet rays and infrared rays are included in sunlight. In particular, near infrared rays at 800 to 2500 nm are called heat rays, which cause indoor temperatures to rise by entering the room through openings.

In recent years, therefore, heat shielding materials have been considered for use in window materials for various buildings and vehicles, to shield heat rays while allowing sufficient visible light in, thereby maintaining brightness while at the same time preventing a rise in room temperature, and various methods have been proposed for this purpose.

Patent Documents 1 and 2 propose heat ray reflecting plates in which mica coated with titanium oxide is blended with transparent resins such as methacrylic resin and polycarbonate resin. In these heat ray reflecting plates, it is necessary to add a large amount of mica coated with titanium oxide (hereafter referred to as "heat ray reflecting particles") to enhance heat ray shielding performance. However, there is a problem that visible light transmission decreases when the amount of heat ray reflecting particles added is increased. On the contrary, when the amount of heat ray reflecting particles added is decreased, the visible light transmission increases but the heat ray shielding decreases, so it is difficult to simultaneously satisfy the heat ray shielding and the visible light transmission. Furthermore, when a large amount of heat ray reflecting particles is added, the material properties of the transparent resin as a base material, especially impact resistance and toughness, are reduced, which is a disadvantage in terms of strength.

In Patent Document 3, the applicant of the present application proposed fine particle dispersion of infrared-shielding material, which is formed by dispersing fine particles of an infrared-shielding material in a medium, the fine particles of the infrared-shielding material including: tungsten oxide fine particles and/or complex tungsten oxide fine particles, wherein a dispersed particle diameter of the fine particles of the infrared-shielding material is 1 nm or more and 800 nm or less.

### RELATED-ART DOCUMENT

### Patent Document

Patent Document 1: Japanese Patent Application Laid-Open No. 05-78544
Patent Document 2: Japanese Patent Application Laid-Open No. 02-173060
Patent Document 3: International Publication No. WO 2005/037932

### SUMMARY OF THE INVENTION

### Problems to be Solved by the Invention

Patent Document 3 provides a near infrared shielding material fine particle, a near infrared shielding material fine particle dispersion, a near infrared shielding body, and a near infrared shielding material fine particle, which are transparent and have no change in color tone, and which sufficiently transmit visible light and efficiently shield invisible near infrared rays at a wavelength of 780 nm or more, and a production method thereof. However, in recent years, performance such as weather resistance has also been required.

According to an aspect of the present invention, it is an object to provide a heat ray shielding resin sheet material having excellent weather resistance.

### Means for Solving the Problems

According to an aspect of the present invention, there is provided a heat ray shielding resin sheet material including:
near infrared absorbing material particles; and
a resin,
wherein the near infrared absorbing material particles contain particles of a complex tungsten oxide represented by General Formula: MₓW_{y}O_{z} (where an element M is one or more elements selected from H, He, alkali metals, alkaline-earth metals, rare-earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I, W represents tungsten, O represents oxygen, 0.001≤x/y≤1, and 3.0<z/y).

### Effects of the Invention

According to an aspect of the present invention, it is possible to provide a heat ray shielding resin sheet material having excellent weather resistance.

### BRIEF DESCRIPTION OF THE DRAWINGS

[FIG. 1] FIG. 1 is a view illustrating a hybrid plasma reactor used in Example 1.
[FIG. 2] FIG. 2 is a view illustrating a high-frequency plasma reactor used in Example 2.
[FIG. 3] FIG. 3 is a cross-sectional view illustrating a heat ray shielding resin sheet material having a hollow three-layer structure.
[FIG. 4] FIG. 4 is a cross-sectional view illustrating a heat ray shielding resin sheet material having a hollow seven-layer structure.

### DETAILED DESCRIPTION OF THE INVENTION

First, near infrared absorbing material particles that can be suitably used in a heat ray shielding resin sheet material according to the present embodiment, and a method for producing the same will be described under "1. Near Infrared Absorbing Material Particles" and "2. Method for Producing Near Infrared Absorbing Material Particles". Next, the heat ray shielding resin sheet material according to the present embodiment and a method for producing the same will be described in detail under "3. Heat Ray Shielding Resin Sheet Material" and "4. Method for Producing Heat Ray Shielding Resin Sheet Material".

### 1. Near Infrared Absorbing Material Particles

Near infrared absorbing material particles can contain particles of complex tungsten oxide represented by General Formula: MₓW_{y}O_{z}.

In the above General Formula, the element M is one or more elements selected from H, He, alkali metals, alkaline-earth metals, rare-earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I. W represents tungsten. O represents oxygen, x, y, and z can satisfy 0.001≤x/y≤1, and 3.0<z/y.

The present inventors have conducted earnest studies in order to make the near infrared absorbing material particles excellent in weather resistance. In the present specification, excellent weather resistance represents near infrared absorbability that would not significantly change even in a high-temperature environment.

In general, materials containing free electrons are known to exhibit plasma oscillation-induced reflection and absorption responses to electromagnetic radiations having a wavelength of from 200 nm through 2,600 nm, which is around the solar ray range. It is known to be able to obtain visible light transparency through powders of these free electron-containing materials, provided that the particles are smaller than the light wavelength, because the visible light (having a wavelength of 380 nm or longer and 780 nm or shorter) is less geometrically scattered by such particles. In the present specification, "transparency" is used to mean a high transmissivity and scarce scattering of light in the visible light range.

Tungsten oxide represented by General Formula WO₃₋ₐ, and what is generally referred to as tungsten bronze obtained by adding an electropositive element such as Na to tungsten trioxide are conductive materials, and are known as free electron-containing materials. Analyses of, for example, single crystals of these materials suggest free electrons' responses to light in the near infrared range.

In general, tungsten trioxide (WO₃), in which effective free electrons are absent, thus has a poor near infrared absorbability and reflectivity, and is not effective as a near infrared absorbing material. Here, reducing the ratio of oxygen to tungsten in tungsten trioxide to less than 3 is known to produce free electrons in the tungsten oxide.

Moreover, it has been an existing practice to add an element M to the tungsten oxide to produce a complex tungsten oxide, because free electrons are produced in the thusly formulated complex tungsten oxide, which hence expresses free electron-attributable absorbability to the near infrared range, and is effective as a material for absorbing near infrared around a wavelength of 1,000 nm.

The present inventors have conducted additional studies into tungsten oxide and complex tungsten oxide in order to obtain near infrared absorbing material particles excellent in weather resistance. As a result, the present inventors have found it possible to make both of near infrared absorbability and weather resistance be satisfied in near infrared absorbing material particles containing particles of a complex tungsten oxide represented by General Formula: MₓW_{y}O_{z}, by adjusting y and z in the above General formula to 3.0<z/y, and have completed the present invention.

The near infrared absorbing material particles according to the present embodiment can contain particles of a complex tungsten oxide represented by General Formula: MₓW_{y}O_{z} as described above. The near infrared absorbing material particles according to the present embodiment may be constituted by particles of a complex tungsten oxide represented by the above General Formula. However, also in this case, it is not intended to exclude the near infrared absorbing material particles containing unavoidable components that may mix during, for example, a production process.

Here, in terms of enhancing safety, the element M in the above General Formula is preferably one or more elements selected from H, He, alkali metals, alkaline-earth metals, rare-earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I as described above. Particularly, in terms of noticeably improving optical properties to qualify as a near infrared absorbing material and weather resistance, the element M is more preferably an element belonging to alkali metals, alkaline-earth metal elements, transition metal elements, the Group 4B elements, and the Group 5B elements.

When the particles of the complex tungsten oxide contain a crystal having a hexagonal crystal structure, the particles have a noticeably improved visible light transmittance, and a noticeably improved near infrared absorption. A hexagonal crystal structure is an assembly of a multitude of units, in each of which, six octahedrons, each of which is formed of WO₆ units, are assembled and form a hexagonal void (tunnel), and the element M is seated in the void.

The particles of the complex tungsten oxide are not limited to containing the crystal having the hexagonal crystal structure. So long as the particles of the complex tungsten oxide have, for example, the unit structure described above, i.e., a structure in which six octahedrons, each of which is formed of WO₆ units, are assembled and form a hexagonal void, and the element M is seated in the void, visible light transmittance can be noticeably improved, and near infrared absorption can be noticeably improved. Hence, the particles of the complex tungsten oxide can obtain high effects even without containing the crystal having the hexagonal crystal structure, but only by having the unit structure.

As described above, when the particles of the complex tungsten oxide have the structure in which the electropositive ion of the element M is added in the hexagonal void, near infrared absorption is noticeably improved. Here, in general, when an element M having a large ionic radius is added, the hexagonal crystal or the structure described above is likely to be formed. Specifically, when the complex tungsten oxide contains one or more elements selected from Cs, Rb, K, Tl, In, Ba, Li, Ca, Sr, Fe, and Sn as the element M, the complex tungsten oxide is likely to have the hexagonal crystal or the structure described above. Hence, it is preferable that the particles of the complex tungsten oxide contain one or more elements selected from Cs, Rb, K, Tl, In, Ba, Li, Ca, Sr, Fe, and Sn as the element M, and it is more preferable that the element M be one or more elements selected from Cs, Rb, K, Tl, In, Ba, Li, Ca, Sr, Fe, and Sn.

Moreover, when the particles of the complex tungsten oxide contain one or more selected from Cs and Rb among these elements M having a large ionic radius, the particles of the complex tungsten oxide are likely to have the hexagonal crystal or the structure described above, and can satisfy both of near infrared absorption and visible light transmission and exhibit a particularly high performance.

When the particles of the complex tungsten oxide having the hexagonal crystal structure have a uniform crystal structure, x/y, which indicates the content ratio of the element M to 1 mole of tungsten, is preferably 0.2 or greater and 0.5 or less, and more preferably 0.33. When x/y is 0.33, it is inferred that the element M is seated in all hexagonal voids.

The particles of the complex tungsten oxide are effective as the near infrared absorbing material, also when the particles contain a crystal other than the hexagonal crystal described above, such as a tetragonal crystal and a cubic crystal.

The addition amount of the element M in the complex tungsten oxide, regardless of whether the complex tungsten oxide contains the cubic crystal or the tetragonal crystal, has a preferable range and an upper limit that are attributable to the structure of the cubic crystal and the tetragonal crystal. The upper limit of x/y, which is the content ratio of the element M to 1 mole of tungsten, is 1 mole in the cubic crystal, and approximately 0.5 moles in the tetragonal crystal. The upper limit of x/y, which is the content ratio of the element M to 1 mole of tungsten, is different depending on, for example, the type of the element M. It is easy to industrially produce the tetragonal crystal, when the upper limit of x/y is approximately 0.5 moles.

However, because briefly defining these structures can involve complications, and the ranges in question are examples that specify quite basic ranges, the present invention is not to be limited to these ranges.

There is a tendency that the position in the near infrared range at which near infrared is absorbed by the particles of the complex tungsten oxide varies depending on the structure of the crystal contained in the particles. There is a tendency that the near infrared absorption position of the tetragonal crystal is at a longer wavelength side than that of the cubic crystal, and the near infrared absorption position of the hexagonal crystal is at an even longer wavelength side than that of the tetragonal crystal. Moreover, along with the absorption position variation, the hexagonal crystal has the minimum visible light absorption, the tetragonal crystal has the next minimum visible light absorption, and the cubic crystal has the maximum visible light absorption among these crystals. Therefore, it is preferable to select the crystal system to be contained, depending on, for example, the required performance. For example, when used for a purpose in which it is necessary to transmit visible light as much as possible and absorb near infrared light as much as possible, it is preferable that the particles of the complex tungsten oxide contain the hexagonal crystal. However, the tendencies of the optical properties described here are general tendencies in the true sense of the term, and the optical properties may vary depending also on the type and addition amount of the element added, and oxygen level. Hence, the present invention is not to be limited to the optical properties.

By applying control of the aforementioned oxygen level and addition of the free electron-producing element M both to the complex tungsten oxide, it is possible to obtain a more efficient near infrared absorbing material having excellent weather resistance. When the general formula of the complex tungsten oxide, which is the near infrared absorbing material to which both the oxygen level control and addition of the free electron-producing element are applied, is expressed as MₓW_{y}O_{z}, x and y may be defined as 0.001≤x/y≤1, and it is preferable that x and y satisfy 0.20≤x/y≤0.37.

In the General Formula described above, y and z satisfy 3.0<z/y, and it is preferable that y and z satisfy 3.0<z/y<3.4, more preferably 3.0<z/y<3.3, and yet more preferably 3.0<z/y<3.22.

According to the applicant's studies, it is considered that the element M will be seated in all hexagonal voids in the complex tungsten oxide particles having the hexagonal crystal structure, when the value x/y is 0.33 when z/y=3.

It has been confirmed by chemical analyses that z/y is greater than 3 in the complex tungsten oxide particles contained in the near infrared absorbing material particles according to the present embodiment. In the meantime, it has been confirmed by powder X-ray diffractometry that the complex tungsten oxide particles contained in the near infrared absorbing material particles according to the present embodiment may assume a tungsten bronze structure of at least any selected from a tetragonal crystal, a cubic crystal, and a hexagonal crystal, when z/y=3. Accordingly, it is preferable that the particles of the complex tungsten oxide contained in the near infrared absorbing material particles according to the present embodiment contain a crystal having one or more crystal structures selected from a hexagonal crystal, a tetragonal crystal, and a cubic crystal. By containing the crystal having the crystal structures described above, the particles of the complex tungsten oxide can exhibit noticeably excellent near infrared absorbability and visible light transmissivity.

When the z/y value is greater than 3, it is considered that the oxygen atoms are incorporated in the crystal of the particles of the complex tungsten oxide. It is considered that the consequent incorporation of the oxygen atoms in the crystal can realize excellent weather resistance in the particles of the complex tungsten oxide, without degeneration of the crystal even when exposed to heat or humidity.

The crystal structure of the particles of the complex tungsten oxide contained in the near infrared absorbing material particles according to the present embodiment can be confirmed based on an X-ray diffraction pattern by powder X-ray diffractometry (Θ-2Θ method).

The near infrared absorbing material particles according to the present embodiment exhibits light transmissivity of which the local maximum value is in the wavelength range of 350 nm or longer and 600 nm or shorter, and of which the local minimum value is in the wavelength range of 800 nm or longer and 2,100 nm or shorter, and can exhibit an excellent near infrared absorbing effect and weather resistance. It is preferable that the near infrared absorbing material particles according to the present embodiment have a local maximum value in the wavelength range of 440 nm or longer and 600 nm or shorter, and a local minimum value in the wavelength range of 1,150 nm or longer and 2,100 nm or shorter.

The particle diameter of the near infrared absorbing material particles according to the present embodiment is preferably 100 nm or less. In terms of exhibiting an even better near infrared absorbability, the particle diameter is more preferably 10 nm or greater and 100 nm or less, more preferably 10 nm or greater and 80 nm or less, particularly preferably 10 nm or greater and 60 nm or less, and the most preferably 10 nm or greater and 40 nm or less. When the particle diameter of the near infrared absorbing material particles is in the range of 10 nm or greater and 40 nm or less, the best near infrared absorbability is exhibited.

Here, the particle diameter represents the diameter of the individual near infrared absorbing material particles that do not aggregate, i.e., the particle diameter of each individual particle.

The particle diameter here does not include the diameter of an aggregate of the near infrared absorbing material particles, and is different from a dispersed particle diameter.

The particle diameter here can be calculated based on, for example, particle diameters of a plurality of particles measured by using, for example, a transmission electron microscope (TEM) in a state in which the near infrared absorbing material particles are dispersed. Because the near infrared absorbing material particles typically have indefinite shapes, the diameter of the minimum circumscribed circle of the particles may be used as the particle diameter of the particles. For example, when particle diameters of a plurality of particles are measured per particle as described above by using, for example, a transmission electron microscope, it is preferable that all of these particles satisfy the above-specified particle diameter range. The number of particles to be measured is not particularly limited, and is preferably, for example, 10 or greater and 50 or less.

In terms of exhibiting excellent near infrared absorbability, the crystallite size of the complex tungsten oxide particles is preferably 10 nm or greater and 100 nm or less, more preferably 10 nm or greater and 80 nm or less, yet more preferably 10 nm or greater and 60 nm or less, and particularly preferably 10 nm or greater and 40 nm or less. This is because noticeably excellent near infrared absorbability is exhibited when the crystallite size is in the range of 10 nm or greater and 40 nm or less. The crystallite size of the complex tungsten oxide particles contained in the near infrared absorbing material particles can be calculated by the Rietveld method based on an X-ray diffraction pattern measured by powder X-ray diffractometry (Θ-2Θ method).

Because a near infrared absorbing material particle dispersion containing the particles of the complex tungsten oxide according to the present embodiment heavily absorbs the near infrared range, particularly, light around the wavelength of 1,000 nm, the transmitted light often has a blue or green color tone.

The dispersed particle diameter of the near infrared absorbing material particles according to the present embodiment may be selected variously in accordance with the purpose for which the particles are used. When used in an application in which transparency is maintained, it is preferable that the near infrared absorbing material particles have a dispersed particle diameter of 800 nm or less. This is because particles having a dispersed particle diameter of 800 nm or less do not completely scatter and shield light, and can keep the visible light range visible and can efficiently maintain transparency at the same time.

When transparency of the visible light range is particularly important, it is preferable to take into consideration scattering by the particles. The dispersed particle diameter includes the diameter of an aggregate of the near infrared absorbing material particles, and is different from the particle diameter described above.

When reducing scattering by the particles is important, the dispersed particle diameter of the near infrared absorbing material particles according to the present embodiment is preferably 200 nm or less, more preferably 10 nm or greater and 200 nm or less, and yet more preferably 10 nm or greater and 100 nm or less. This is because when the dispersed particle diameter is small, light in the visible light range having a wavelength of 380 nm or longer and 780 nm or shorter is less geometrically scattered or Mie-scattered, and a dispersion containing the near infrared absorbing material particles according to the present embodiment can avoid being unable to obtain a clear transparency through becoming like frosted glass, i.e., because a dispersed particle diameter of 200 nm or less is in the Rayleigh scattering region in which light is less geometrically scattered or Mie-scattered as described above, and light to be scattered is proportional to the sixth power of the dispersed particle diameter, meaning reduction of light to be Rayleigh-scattered and improvement of transparency along with reduction of the dispersed particle diameter. Moreover, a dispersed particle diameter of 100 nm or less is preferable because there is very scarce light to be scattered. In terms of avoiding scattering of light, a smaller dispersed particle diameter is more preferable, and it is easy to industrially produce particles having a dispersed particle diameter of 10 nm or greater.

By adjusting the dispersed particle diameter to 800 nm or less, it is possible to adjust the haze (haze value) of the near infrared absorbing material particle dispersion obtained by dispersing the near infrared absorbing material particles in a medium to 10% or lower at a visible light transmittance of 85% or lower. Particularly, when the dispersed particle diameter is 100 nm or less, the haze can be 1% or lower.

Scattering of light by the near infrared absorbing material particle dispersion need be considered in terms of aggregation of the near infrared absorbing material particles, and need be studied in terms of the dispersed particle diameter.

### 2. Method for Producing Near Infrared Absorbing Material Particles

An example of formulation of a method for producing the near infrared absorbing material particles will be described. According to the method for producing the near infrared absorbing material particles of the present embodiment, it is possible to produce the near infrared absorbing material particles described above. Hence, descriptions of some of the particulars already described will be omitted.

The complex tungsten oxide particles represented by the above General Formula MₓW_{y}O_{z} and contained in the near infrared absorbing material particles according to the present embodiment can be produced by, for example, a solid phase reaction method and a plasma process that are described below.

Each method will be described below.

### (1) Solid Phase Reaction Method

When producing the complex tungsten oxide particles by the solid phase reaction method, the method may include the following steps.

A tungsten compound and an element M compound are mixed, to prepare a raw material mixture (mixing step). It is preferable to blend and mix the raw materials such that the amount-of-substance ratio (mole ratio) of the element M to tungsten in the raw material mixture becomes the intended ratio of x to y in the above General Formula representing the particles of the complex tungsten oxide.

The raw material mixture obtained in the mixing step is thermally treated in an atmosphere containing oxygen (first thermal treatment step).

The thermally treated product obtained in the first thermal treatment step is thermally treated in a reducing gas atmosphere or a mixture gas atmosphere of a reducing gas and an inert gas, or in an inert gas atmosphere (second thermal treatment step).

After the second thermal treatment step, the near infrared absorbing material particles may be subjected to, for example, a pulverizing process as needed, such that the particles become a desired particle diameter.

The near infrared absorbing material particles according to the present embodiment containing the complex tungsten oxide particles obtained through the steps described above have a sufficient near infrared absorbing power, and favorable properties as the solar radiation shielding function material particles. Moreover, the near infrared absorbing material particles can be excellent in weather resistance.

Each step will be described in detail below.

### (Mixing Step)

As the tungsten compound to be fed to the mixing step, one or more selected from, for example, tungstic acid (H₂WO₄), ammonium tungstate, tungsten hexachloride, and tungsten hydrate obtained by adding water to tungsten hexachloride dissolved in an alcohol to hydrolyze tungsten hexachloride, and then evaporating the solvent from the resulting product, can be used.

As the element M compound to be fed to the mixing step, one or more selected from, for example, oxide, hydroxide, nitrate, sulfate, chloride, and carbonate of the element M can be used.

When mixing the tungsten compound and the element M compound in the mixing step, it is preferable to blend and mix the raw materials such that the amount-of-substance ratio (M:W) of the element M (M) to tungsten (W) in the raw material mixture to be obtained becomes equal to the intended x:y in the General Formula MₓW_{y}O_{z}.

The mixing method is not particularly limited, and either of wet mixing and dry mixing can be used. In the wet mixing, it is possible to obtain a mixture powder of the element M compound and the tungsten compound, by drying the mixture liquid obtained through the wet mixing. The drying temperature and time after the wet mixing are not particularly limited.

The dry mixing may be performed with a publicly known mixing machine such as a grinding machine, a kneader, a ball mill, a sand mill, and a paint shaker that are commercially available. The mixing conditions such as the mixing time and the mixing speed are not particularly limited.

### (First Thermal Treatment Step)

The thermal treatment temperature in the first thermal treatment step is not particularly limited, but is preferably higher than the temperature at which the complex tungsten oxide particles crystallize. Specifically, the thermal treatment temperature is preferably 500°C or higher and 1,000°C or lower and more preferably 500°C or higher and 800°C or lower.

### (Second Thermal Treatment Step)

In the second thermal treatment step, the thermal treatment may be performed in a reducing gas atmosphere or a mixture gas atmosphere of a reducing gas and an inert gas, or in an inert gas atmosphere as described above at a temperature of 500°C or higher and 1,200°C or lower.

When using a reducing gas in the second thermal treatment step, the type of the reducing gas is not particularly limited, but hydrogen (H₂) is preferable. When hydrogen is used as the reducing gas, the concentration of the reducing gas may be appropriately selected in accordance with, for example, the firing temperature and the quantities of the starting raw materials, and is not particularly limited. For example, the concentration of the reducing gas is 20vol% or lower, preferably 10vol% or lower, and more preferably 7vol% or lower. This is because when the concentration of the reducing gas is 20vol% or lower, it is possible to avoid WO₂, which does not have the solar radiation shielding function, being produced due to rapid reduction.

### (2) Plasma Process

The complex tungsten oxide particles represented by the above General Formula MₓW_{y}O_{z} and contained in the near infrared absorbing material particles according to the present embodiment can also be produced by, for example, a plasma process. When producing the near infrared absorbing material particles by a plasma process, the process may include the following steps.

As the starting raw material, a raw material mixture of a tungsten compound and an element M compound, or a complex tungsten oxide precursor represented by General Formula MₓW_{y}O_{z'} is prepared (raw material preparing step).

The starting raw material prepared in the raw material preparing step is fed into a plasma together with a carrier gas, to produce the intended complex tungsten oxide particles through evaporation and condensation (reaction step) .

### (Raw Material Preparing Step)

When preparing a raw material mixture of a tungsten compound and an element M compound as the starting raw material, it is preferable to blend and mix the raw materials such that the amount-of-substance ratio (M:W) of the element M (M) to tungsten (W) in the raw material mixture of the tungsten compound and the element M compound becomes equal to the ratio x:y of x to y in the above General Formula representing the intended complex tungsten oxide.

Descriptions of the tungsten compound and the element M compound will be omitted here, because the same materials as those described in the solid phase reaction method can be suitably used.

In addition, in the complex tungsten oxide precursor expressed by the general formula MₓW_{y}O_{z'}, M can be the M element, W can be tungsten and O can be oxygen, and x, y, and z' preferably satisfy 0.001≤x/y≤1 and 2.0<z'/y.

The complex tungsten oxide precursor represented by the General Formula MₓW_{y}O_{z'} can be synthesized by, for example, the solid phase reaction method described above. It is preferable that such a complex tungsten oxide precursor is a material having x/y that matches x/y in the particles of the intended complex tungsten oxide represented by the General Formula MₓW_{y}O_{z}.

### (Reaction Step)

In the reaction step, a mixture gas of an inert gas and an oxygen gas can be used as the carrier gas that carries the starting raw material.

A plasma can be generated in an inert gas alone or in a mixture gas atmosphere of an inert gas and a hydrogen gas. The plasma is not particularly limited, but a thermal plasma is preferable. The raw material fed into the plasma momentarily evaporates, and the evaporated raw material condenses through arriving at the plasma flame tail, and rapidly cools and freezes outside the plasma flame, to produce particles of the complex tungsten oxide. By the plasma process, for example, particles of complex tungsten oxide having a single crystal phase can be produced.

As the plasma used in the method for producing the near infrared absorbing material particles according to the present embodiment, any selected from, for example, any of a direct-current arc plasma, a high-frequency plasma, a microwave plasma, and a low-frequency alternating-current plasma, a superimposed plasma of any of these plasmas, a plasma obtained by an electrical method of applying a magnetic field to a direct-current plasma, a plasma produced by a high-power laser, and a plasma obtained by a high-power electron beam or ion beam is preferable. Regardless of which thermal plasma is used, a thermal plasma having a high-temperature portion of 10000 K or higher, more preferably 10000 K or higher and 25000 K or lower is preferable, and a plasma that can control the time taken to produce particles is particularly preferable.

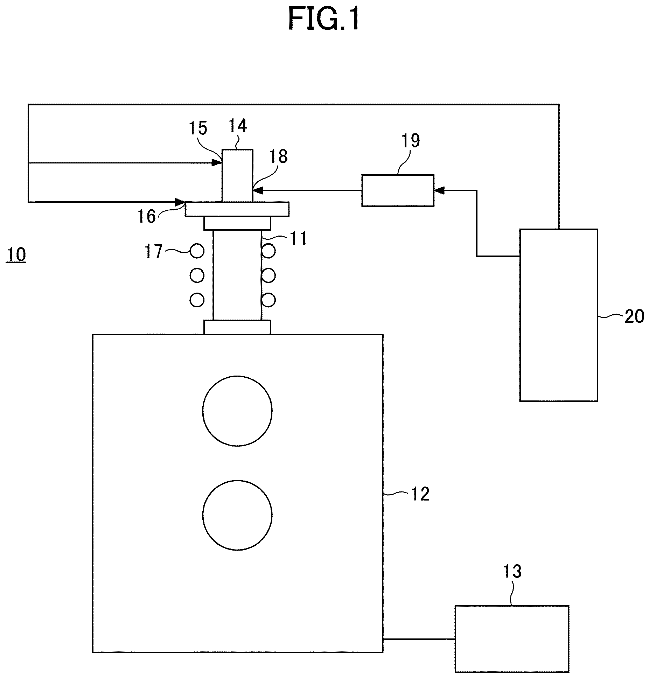

A specific example of a plasma process-based formulation of the reaction step included in the method for producing the near infrared absorbing material particles according to the present embodiment will be described with reference to FIG. 1.

The device illustrated in FIG. 1 is a hybrid plasma reactor 10 in which a direct-current plasma device and a high-frequency plasma device are superimposed.

The hybrid plasma reactor 10 includes a water-cooling quartz double tube 11, and a reaction chamber 12 coupled to the water-cooling quartz double tube 11. A vacuum pumping device 13 is coupled to the reaction chamber 12.

A direct-current plasma torch 14 is provided above the water-cooling quartz double tube 11, and a plasma generation gas feeding port 15 is provided in the direct-current plasma torch 14.

It is possible to feed a sheath gas for high-frequency plasma generation and quartz tube protection outside the plasma area along the internal wall of the water-cooling quartz double tube 11. A sheath gas introducing port 16 is provided in a flange above the water-cooling quartz double tube 11.

A water-cooling copper coil 17 for high-frequency plasma generation is provided around the water-cooling quartz double tube 11.

A raw material powder carrier gas feeding port 18 is provided near the direct-current plasma torch 14, and is coupled through a duct to a raw material powder feeding device 19 configured to feed a raw material powder.

A gas feeding device 20 is coupled to the plasma generation gas feeding port 15, the sheath gas introducing port 16, and the raw material powder feeding device 19 through ducts, and a predetermined gas can be fed to each member from the gas feeding device 20. Feeding ports may be provided in any portions other than the members described above and may be coupled to the gas feeding device 20, such that the members in the device can be cooled or put under a predetermined atmosphere.

An example of formulation of the method for producing the particles of the complex tungsten oxide using the hybrid plasma reactor 10 described above will be described.

First, the vacuum pumping device 13 vacuum-pumps the interior of the reaction system constituted by the water-cooling quartz double tube 11 and the reaction chamber 12. Here, the degree of vacuum is not particularly limited, but vacuum pumping may be to, for example, approximately 0.1 Pa (approximately 0.001 Torr). After the interior of the reaction system is vacuum-pumped, the gas feeding device 20 can feed an argon gas and fill the reaction system with the argon gas. For example, it is preferable to produce a 1-atm argon gas circulating system in the reaction system.

Subsequently, a plasma gas can further be fed into the reaction chamber 12. The plasma gas is not particularly limited, and any gas selected from, for example, an argon gas, a mixture gas of argon and helium (Ar-He mixture gas), a mixture gas of argon and nitrogen (Ar-N₂ mixture gas), neon, helium, and xenon can be used.

The plasma gas feeding flow rate is not particularly limited. For example, the plasma gas can be introduced through the plasma generation gas feeding port 15 at a flow rate of preferably 3 L/min or higher and 30 L/min or lower and more preferably 3 L/min or higher and 15 L/min or lower. Then, a direct-current plasma can be generated.

In the meantime, a sheath gas for high-frequency plasma generation and quartz tube protection can be fed in a swirling shape to outside the plasma area along the internal wall of the water-cooling quartz double tube 11 through the sheath gas introducing port 16. The type and feeding rate of the sheath gas are not particularly limited. For example, an argon gas of 20 L/min or higher and 50 L/min or lower and a hydrogen gas of 1 L/in or higher and 5 L/min or lower may be flowed, to generate a high-frequency plasma.

A high-frequency power supply can be applied to the water-cooling copper coil 17 for high-frequency plasma generation. The conditions of the high-frequency power supply are not particularly limited. For example, a high-frequency power supply of a frequency of approximately 4 MHz can be applied by 15 kW or higher and 50 kW or lower.

After such a hybrid plasma is generated, the raw material powder feeding device 19 can introduce the raw material through the raw material powder carrier gas feeding port 18, using a carrier gas. The carrier gas is not particularly limited. For example, a mixture gas of an argon gas of 1 L/min or higher and 8 L/min or lower and an oxygen gas of 0.001 L/min or higher and 0.8 L/min or lower can be used.

The raw material mixture or the complex tungsten oxide precursor, which is the starting raw material to be fed into the plasma, is introduced into the plasma to be reacted. The feeding rate of the starting raw material through the raw material powder carrier gas feeding port 18 is not particularly limited. It is preferable to feed the starting raw material at a rate of, for example, 1 g/min or higher and 50 g/min or lower, and more preferably 1 g/min or higher and 20 g/min or lower.

When the feeding rate of the starting raw material is 50 g/min or lower, it is possible to sufficiently increase the proportion of the starting raw material that passes through the central portion of the plasma flame, to inhibit the proportions of unreacted substances and intermediate products, and to increase the probability of generation of the desired complex tungsten oxide particles. When the feeding rate of the starting raw material is 1 g/min or higher, it is possible to increase productivity.

The starting raw material fed into the plasma momentarily evaporates in the plasma and condenses, to produce complex tungsten oxide particles having an average primary particle diameter of 100 nm or less.

The particle diameter of the complex tungsten oxide particles to be obtained by the production method according the present embodiment can be easily controlled based on, for example, plasma output power, plasma flow rate, and the amount of the raw material powder to be fed.

Through the reaction, the produced complex tungsten oxide particles accumulate in the reaction chamber 12, so the accumulated particles can be recovered.

The method for producing the near infrared absorbing material particles according to the present embodiment has been described above. The near infrared absorbing material particles obtained by this production method can be evaluated and confirmed by, for example, the method described below.

For example, it is possible to perform chemical quantitative analyses of the constituting elements of the near infrared absorbing material particles obtained by the method for producing the near infrared absorbing material particles described above. The analyzing method is not particularly limited. For example, the element M and tungsten can be analyzed by plasma emission spectroscopy, and oxygen can be analyzed by an inert gas impulse heating/melting infrared absorption method.

The crystal structure of the complex tungsten oxide particles contained in the near infrared absorbing material particles can be confirmed by powder X-ray diffractometry.

The particle diameter of the near infrared absorbing material particles can be confirmed by measurement of the particle diameter based on TEM observation or dynamic light scattering.

### 3. Heat Ray Shielding Resin Sheet Material

The heat ray shielding resin sheet material (hereafter sometimes referred to as "resin sheet material") according to the present embodiment may include the near infrared absorbing material particles described above and a resin.

Because the near infrared absorbing material particles have already been described, their explanation is omitted here.

The resin can be selected according to the application and the like of the heat ray shielding resin sheet material, and for example, various transparent resins can be used. Especially, from the viewpoint of optical properties, mechanical properties, raw material cost, and the like, the resin is preferably a polycarbonate resin or an acrylic resin.

When the polycarbonate resin is used as the resin for the heat ray shielding resin sheet material, the polycarbonate resin can be obtained by reacting, for example, dihydric phenols with a carbonate-based precursor by a solution method or by a melting method. Representative examples of the dihydric phenols include 2,2-bis(4-hydroxyphenyl)propane (bisphenol A), 1,1-bis(4-hydroxyphenyl)ethane, 1,1-bis(4-hydroxyphenyl)cyclohexane, 2,2-bis(4-hydroxy-3,5-dimethylphenyl)propane, 2,2-bis(4-hydroxy-3,5-dibromophenyl)propane, 2,2-bis(4-hydroxy-3 methylphenyl)propane, bis(4-hydroxyphenyl)sulfide, bis(4-hydroxyphenyl)sulfone, and the like. The dihydric phenols are preferably bis(4-hydroxyphenyl)alkane-based, and more preferably those containing bisphenol A as a main component.

As the acrylic resin, a polymer or a copolymer using methyl methacrylate, ethyl methacrylate, propyl methacrylate, or butyl methacrylate as a main raw material can be used. If necessary, an acrylic ester having an alkyl group with 1 to 8 carbon atoms, vinyl acetate, styrene, acrylonitrile, methacrylonitrile or the like may be used as a copolymer component. Further, an acrylic resin polymerized in multiple stages can also be used.

In the resin sheet material according to the present embodiment, the near infrared absorbing material particles can be blended in the resin, preferably dispersed in the resin, and especially more preferably uniformly dispersed in the resin.

In the resin sheet material according to the present embodiment, the resin can be molded into a desired shape, and the shape is not particularly limited, but can have, for example, a sheet shape. The thickness of the sheet is not particularly limited, and can be adjusted to any thickness as needed, for example, from a thick plate shape to a thin film shape. It is also preferable that the near infrared absorbing material particles are dispersed in the resin having the sheet shape, as described above.

The resin sheet material according to the present embodiment can contain, for example, the resin blended with the near infrared absorbing material particles, as described above. However, there is no limitation to this configuration, and the resin sheet material according to the present embodiment can further have optional members as needed. The resin sheet material according to the present embodiment can also include, for example, an ultraviolet absorbing film and a hard coat layer, which will be described below.

For example, the heat ray shielding resin sheet material can also include the ultraviolet absorbing film, which is a resin film containing an ultraviolet absorber, on the surface of the sheet made of the resin containing at least the near infrared absorbing material particles.

When the heat ray shielding resin sheet material includes an ultraviolet absorbing film, the weather resistance of the heat ray shielding resin sheet material can be further improved, and the heat ray shielding resin sheet material can also have an ultraviolet shielding effect.

The heat ray shielding resin sheet material can also include the hard coat layer having abrasion resistance on the surface of the sheet made of a resin blended with at least the near infrared absorbing material particles. By having the hard coat layer, the abrasion resistance of the heat ray shielding resin sheet material can be improved, and the heat ray shielding resin sheet material can be suitably applied to windows of vehicles and automobiles, and the like.

The heat ray shielding resin sheet material of the present embodiment may include a plurality of sheet layers containing at least the resin described above, and one or more of the sheet layers may contain the near infrared absorbing material particles.

Specifically, the heat ray shielding resin sheet material may include, as the sheet layers, a first surface sheet layer, a second surface sheet layer, an intermediate sheet layer, and a connecting sheet layer. The first surface sheet layer may include a first surface, which is an outer surface of the heat ray shielding resin sheet material. The second surface sheet layer may include a second surface, which is an outer surface of the heat ray shielding resin sheet material located on an opposite side of the first surface. The intermediate sheet layer may be placed between the first surface sheet layer and the second sheet layer. That is, the first surface sheet layer, the intermediate sheet layer, and the second surface sheet layer may be placed and laminated in this order. The connecting sheet layer may connect between the first surface sheet layer, the intermediate sheet layer, and the second surface sheet layer.

Also, a void can be included between the first surface sheet layer and the second surface sheet layer. That is, the heat ray shielding resin sheet material according to the present embodiment may have a hollow multilayer structure including the void.

The outer surface means the surface exposed to the outside of the heat ray shielding resin sheet material.

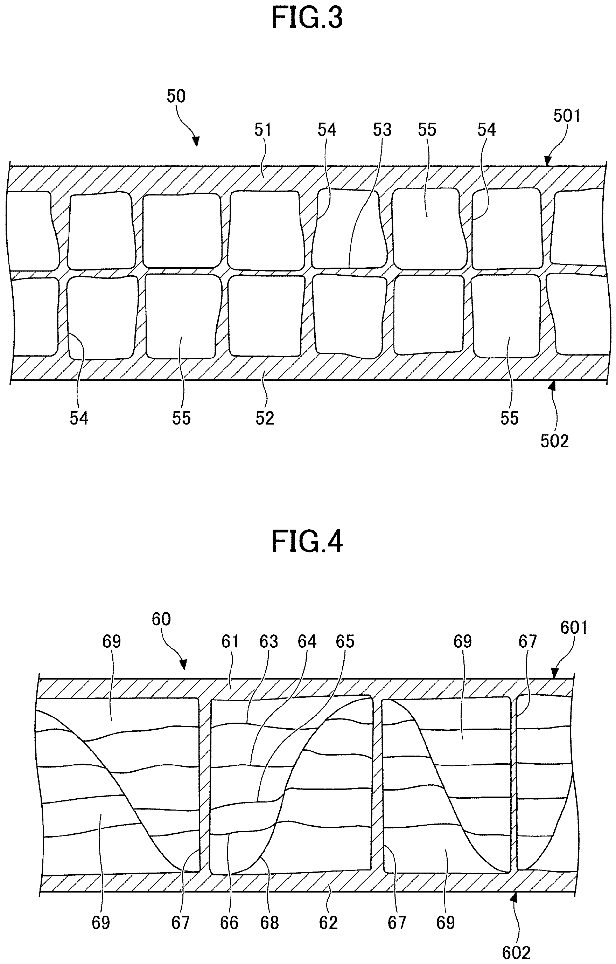

As examples of the heat ray shielding resin sheet material, a heat ray shielding resin sheet material 50 having a hollow three-layer structure illustrated in FIG. 3 and a heat ray shielding resin sheet material 60 having a hollow seven-layer structure illustrated in FIG. 4 will be described. FIGS. 3 and 4 schematically illustrate cross-sectional views of the first surface sheet layer, the second surface sheet layer, and the intermediate sheet layer contained in the heat ray shielding resin sheet material, in a plane parallel to the lamination direction.

In the heat ray shielding resin sheet material 50 illustrated in FIG. 3, an intermediate sheet layer 53 is provided between opposing first and second surface sheet layers 51 and 52, approximately parallel to the first surface sheet layer 51 and the second surface sheet layer 52.

The first surface sheet layer 51 and the second surface sheet layer 52 include a first outer surface 501 and a second outer surface 502, respectively, which are outer surfaces of the heat ray shielding resin sheet material 50.

In the heat ray shielding resin sheet material 50, the connecting sheet layer 54, which is approximately perpendicular to the first surface sheet layer 51, the second surface sheet layer 52, and the intermediate sheet layer 53, connects and integrates the first surface sheet layer 51, the second surface sheet layer 52, and the intermediate sheet layer 53. The first surface sheet layer 51, the second surface sheet layer 52, and the intermediate sheet layer 53 constitute a three-layer structure, and a hollow part 55 is formed surrounded by the first surface sheet layer 51, the second surface sheet layer 52, the intermediate sheet layer 53, and the connecting sheet layer 54. The hollow part 55 corresponds to the void.

In the heat ray shielding resin sheet material 60 illustrated in FIG. 4, four intermediate sheet layers are provided between opposing first and second surface sheet layers 61 and 62. The first surface sheet layer 61 and the second surface sheet layer 62 include a first outer surface 601 and a second outer surface 602, respectively, which are outer surfaces of the heat ray shielding resin sheet material 60. The intermediate sheet layer includes a first intermediate sheet layer 63, a second intermediate sheet layer 64, a third intermediate sheet layer 65, and a fourth intermediate sheet layer 66, and each intermediate sheet layer is provided in approximately parallel and at approximately equal pitch.

The first connecting sheet layer 67, which is perpendicular to the first surface sheet layer 61, the second surface sheet layer 62, and the four intermediate sheet layers, connects and integrates the first surface sheet layer 61, the second surface sheet layer 62, and the first intermediate sheet layer 63 to the fourth intermediate sheet layer 66. The second connecting sheet layer 68 having an approximately sinusoidal waveform that meanders at the alignment pitch of the first connecting sheet layer 67, is in contact with the first surface sheet layer 61 and the second surface sheet layer 62. The second connecting sheet layer 68 intersects the first intermediate sheet layer 63 to the fourth intermediate sheet layer 66, and connects and integrates the first surface sheet layer 61, the second surface sheet layer 62, and the first intermediate sheet layer 63 to the fourth intermediate sheet layer 66.

In the heat ray shielding resin sheet material 60, the first surface sheet layer 61, the second surface sheet layer 62, the first intermediate sheet layer 63 to the fourth intermediate sheet layer 66, and the second connecting sheet layer 68 constitute a seven-layer structure. A hollow part 69 is formed surrounded by the first surface sheet layer 61, the second surface sheet layer 62, the first intermediate sheet layer 63 to the fourth intermediate sheet layer 66, the first connecting sheet layer 67, and the second connecting sheet layer 68. The hollow part 69 corresponds to the void.

In the heat ray shielding resin sheet material of the hollow multilayer structure as described above, all the sheet layers, that is, the first surface sheet layer, the second surface sheet layer, the intermediate sheet layer, and the connecting sheet layer may contain the near infrared absorbing material particles.

However, there is no limitation to the above configuration, for example, only some of the sheet layers of the heat ray shielding resin sheet material may contain the near infrared absorbing material particles. For example, in the heat ray shielding resin sheet material, only one of the first surface sheet layer and the second surface sheet layer including the outer surface may contain the near infrared absorbing material particles. In the heat ray shielding resin sheet material, only two of the first surface sheet layer and the second surface sheet layer including the outer surface of the resin sheet material may contain the near infrared absorbing material particles.

For example, in the heat ray shielding resin sheet material 50 illustrated in FIG. 3, all of the sheet layers of the first surface sheet layer 51, the second surface sheet layer 52, the intermediate sheet layer 53, and the connecting sheet layer 54 may contain the near infrared absorbing material particles using a conventional multi-layer hollow sheet manufacturing device, and the like. Only the first surface sheet layer 51, or only the first surface sheet layer 51 and the second surface sheet layer 52 may contain the near infrared absorbing material particles.

In the heat ray shielding resin sheet material 60 illustrated in FIG. 4, all of the sheet layers of the first surface sheet layer 61, the second surface sheet layer 62, the first intermediate sheet layer 63 to the fourth intermediate sheet layer 66, the first connecting sheet layer 67, and the second connecting sheet layer 68 may contain the near infrared absorbing material particles. Only the first surface sheet layer 61, only the second surface sheet layer 62, or only the first surface sheet layer 61 and the second surface sheet layer 62 may contain the near infrared absorbing material particles.

By making the heat ray shielding resin sheet material a hollow multilayer structure as described above, an air layer with heat insulating effect can be provided between the surface sheet layer and the intermediate sheet layer. Therefore, the heat ray shielding effect can be improved by, for example, preventing the solar energy absorbed by the surface sheet layer on the outdoor side from being released to the indoor side and efficiently releasing the solar energy to the outdoor side.

When only one or two layers of the surface sheet layer of the hollow multilayer structure contains the near infrared absorbing material particles, for example, it is possible to configure the surface sheet layer on the outdoor side to contain more near infrared absorbing material particles. By adopting this configuration, while keeping the near infrared absorbing material particles per unit area of the heat ray shielding resin sheet material constant, for example, the prevention of the solar energy emission to the indoor side as described above can be further improved.

When a plurality of sheet layers contain the near infrared absorbing material particles, the content ratio of the near infrared absorbing material particles may be different for each sheet layer.

When some sheet layers do not contain the near infrared absorbing material particles, the type of the resin constituting the sheet layer is not particularly limited, and for example, various types of transparent resins may be used. As the resin constituting the sheet layer that do not contain the near infrared absorbing material particles, a polycarbonate resin or an acrylic resin may be suitably used.

When the heat ray shielding resin sheet material includes a plurality of sheet layers as described above, the type of resin may be different for each sheet layer, but it is preferable that the resins contained in the multiple sheet layers are the same from the viewpoint of reducing manufacturing cost and improving productivity.

When the heat ray shielding resin sheet material includes a plurality of sheet layers, it is not necessary to have a clear boundary line between each sheet layer constituting the heat ray shielding resin sheet material, and the name described above may be conveniently given according to the arrangement.

A heat ray shielding resin sheet material laminate can be obtained by laminating any of the heat ray shielding resin sheet materials described so far on another resin sheet material according to the application. By using a heat ray shielding resin sheet material as a heat ray shielding resin sheet material laminate, a laminate exhibiting various mechanical properties can be obtained, and by using a heat ray shielding resin sheet material for all or part of the laminate, a laminate having desired optical properties can be obtained.

It is also preferable to use the heat ray shielding resin sheet material and the heat ray shielding resin sheet material laminate described above alone or a mixture of both to construct a building structure. For example, by using the heat ray shielding resin sheet material bolted to a metal skeleton such as aluminum, a wider range of solar energy can be efficiently shielded. Moreover, by processing the heat ray shielding resin sheet material into any shape and using it as a rear window, sunroof, and the like of an automobile, the temperature rise inside the vehicle can be efficiently suppressed.

The heat ray shielding resin sheet material laminate made by laminating the heat ray shielding resin sheet material and glass can be fitted into the window frame of a vehicle or used for the roof, wall, ceiling dome of a building. In this case, the heat ray shielding resin sheet material is placed outside the room. When used in the manner described above, it shields incoming solar energy to reduce the load on the air conditioner, and at the same time, it provides functions such as preventing glass from scattering due to flying stones.

Because the heat ray shielding resin sheet material described above uses the near infrared absorbing material particles with excellent weather resistance, the heat ray shielding resin sheet material also has excellent weather resistance and can stably shield heat rays over a long period of time.

### 4. Method for Producing Heat Ray Shielding Resin Sheet Material

The method of producing the heat ray shielding resin sheet material according to the present embodiment is not particularly limited. The method of producing the heat ray shielding resin sheet material according to the present embodiment may include, for example, a mixture preparing step in which the near infrared absorbing material particles described above are added to at least a part of the resin and dispersed as necessary to prepare a mixture, and a molding step in which the mixture is molded into a desired shape.

In the mixing step, the method of adding and dispersing the near infrared absorbing material particles to the resin is not particularly limited, and any method can be selected. For example, the method of adding the above near infrared absorbing material particles directly to the resin and melt mixing can be used. Another method is to prepare an additive solution in which the near infrared absorbing material particles are dispersed in an optional dispersion medium in advance, and to prepare a mixture (composition for molding) by mixing the additive solution with the resin or the resin raw material. The latter method is particularly preferred because the operation is particularly simple.

Regarding the mixture preparing step, the method for adding and dispersing the near infrared absorbing material particles to the resin will be described using the aforementioned additive solution in which the near infrared absorbing material particles are dispersed in any dispersion medium as an example.

In this case, before the mixture preparing step, the additive solution in which the near infrared absorbing material particles are dispersed in the dispersion medium is prepared (additive solution preparing step). Specifically, the above additive solution for producing the heat ray shielding resin sheet material can be prepared by dispersing the near infrared absorbing material particles in any dispersion medium using, for example, a bead mill, ball mill, sand mill, ultrasonic dispersion, and the like.

The dispersion medium used in the additive solution for producing the heat ray shielding resin sheet material is not particularly limited, but can be selected according to the resin to be blended, conditions for forming the resin sheet material, and the like, and a commonly used organic solvent can be used. The pH of the additive solution may be adjusted by adding an acid or an alkali as needed. To further improve the dispersion stability of the near infrared absorbing material particles in the resin, various surfactants, coupling agents, and the like may be added as dispersants to the additive solution.

The additive solution can then be used to prepare a mixture in which the near infrared absorbing material particles are dispersed in the resin (mixture preparing step). The mixture can be prepared by, for example, adding the additive solution to the resin as a base material and mixing and kneading. For example, the additive solution and the resin component can be mixed with a ribbon blender or the like, and further melt-mixed as needed with mixing machines such as tumblers, Nauta mixer, Henschel mixer, Super mixer, or planetary mixers, or kneading machines such as Banbury mixers, kneaders, rolls, single-screw extruders, or dual-screw extruders. In the resulting mixture, it is preferable that the near infrared absorbing material particles are uniformly dispersed in the resin.

Although the resin as a base material is not particularly limited and, for example, various transparent resins can be used as described above, a polycarbonate resin or an acrylic resin can be suitably used from the viewpoint of optical properties, mechanical properties, raw material cost, and the like.

The method for preparing a mixture of the near infrared absorbing material particles dispersed in the resin is not limited to the method described above. For example, by adding the additive liquid to a resin raw material, mixing them, and then reacting the resin raw material to make a resin, a mixture of the near infrared absorbing material particles dispersed in the resin may be prepared. In this case, the mixture preparing step may have a mixture precursor preparing step in which the resin raw material and the additive are mixed to prepare a mixture precursor, and a reaction step in which the resin raw material is reacted to prepare the mixture.

When the resin as a base material is the polycarbonate resin, the additive solution is added to the dihydric phenols used as the resin raw material, and the mixture precursor is prepared by mixing uniformly in a publicly-known manner. Then, by adding a carbonate-based precursor, exemplified by phosgene, to the mixture precursor and reacting it, a mixture in which the near infrared absorbing material particles are uniformly dispersed in the resin may be prepared.

When the resin as a base material is the acrylic resin, the additive solution is added to methyl methacrylate, ethyl methacrylate, propyl methacrylate, butyl methacrylate, and the like, which are used as raw materials for the acrylic resin, and the mixture precursor is similarly prepared by mixing uniformly by a publicly-known method. Then, by polymerizing the raw material of the acrylic resin in the mixture precursor by a publicly-known method such as suspension polymerization, bulk polymerization, or the like, a mixture in which the near infrared absorbing material particles are uniformly dispersed in the acrylic resin may be prepared.

A mixture in which the near infrared absorbing material particles are dispersed in the resin may also be prepared by a method in which the dispersion medium of the additive solution is removed by a publicly-known method and the obtained powder is added to the resin and melt-mixed uniformly.

The method for producing the heat ray shielding resin sheet material in the present embodiment may have a molding step in which, for example, a mixture in which the near infrared absorbing material particles are dispersed in the resin as described above is molded into a desired shape such as a flat or curved shape by a publicly-known molding method such as injection molding, extrusion molding, compression molding, or the like. It is also possible to perform a pelletizing step in which a mixture in which the near infrared absorbing material particles are dispersed in the resin is once pelletized by a granulator, and then a molding step in which the pellet is molded in the same manner except that the pellet is used.

The molded body obtained in the molding step may also be used as the heat ray shielding resin sheet material according to the present embodiment. In addition, as described later, if necessary, for example, the molded body obtained in the molding step and other members may be bonded to be used as the heat ray shielding resin sheet material.

The thickness of the molded body produced in the molding step is not particularly limited, and may be adjusted to any desired thickness from a thick plate shape to a thin film shape, for example.

The heat ray shielding resin sheet material according to the present embodiment is not limited to a layer containing the near infrared absorbing material particles, and may include layers of other configurations and the like. Therefore, the method of producing the heat ray shielding resin sheet material according to the present embodiment may include a step of forming layers of other configurations, for example, an ultraviolet absorbing film forming step or a hard coat layer forming step described below.

For example, the heat ray shielding resin sheet material may also include a resin coating containing an ultraviolet absorber on the surface of at least one sheet, which is the molded body. That is, the heat ray shielding resin sheet material in the present embodiment may also have an ultraviolet absorbing film, which is the resin coating containing the ultraviolet absorber, in addition to the near infrared absorbing layer containing the near infrared absorbing material particles and the resin. For example, the method of producing the heat ray shielding resin sheet material in the present embodiment may include an ultraviolet absorbing film-forming step in which a coating solution in which an ultraviolet absorber such as benzotriazole or benzophenone is dissolved in various binders is applied on one surface of the sheet, which is the molded body obtained in the molding step, and then cured to form the ultraviolet absorbing film.

When the heat ray shielding resin sheet material includes the ultraviolet absorbing film, the weather resistance of the heat ray shielding resin sheet material can be further improved, and the heat ray shielding resin sheet material can also have an ultraviolet shielding effect.

The heat ray shielding resin sheet material may also include the hard coat layer with abrasion resistance on at least one surface of the sheet. That is, the heat ray shielding resin sheet material according to the present embodiment may also include the hard coat layer in addition to the near infrared absorption layer containing the near infrared absorbing material particles and the resin. For example, the method of producing the heat ray shielding resin sheet material according to the present embodiment may include a hard coat layer forming step for forming an abrasion resistant hard coat layer such as a silicate-based or acrylic-based hard coat layer on one surface of the sheet, which is the molded body obtained in the molding step. By forming the abrasion resistant hard coat layer, the abrasion resistance of the heat ray shielding resin sheet material can be improved, and the heat ray shielding resin sheet material can be suitably applied to windows of vehicles, automobile, and the like.

Thus, it is possible to provide the heat ray shielding resin sheet material by dispersing the near infrared absorbing material particles, which have strong absorption in the near infrared region as the heat ray shielding component, in the resin and forming them into a sheet. According to the method of producing the heat ray shielding resin sheet material according to the present embodiment, the heat ray shielding resin sheet material having a heat ray shielding function and high transmission performance in the visible light region can be provided without using a high-cost physical film formation method or a complicated bonding step.

The heat ray shielding resin sheet material according to the present embodiment may also be composed of a plurality of layers.

Specifically, as described above, the heat ray shielding resin sheet material may also include the first surface sheet layer, the second surface sheet layer, the intermediate sheet layer, and the connecting sheet layer as sheet layers. Because a specific configuration example has already been described, its explanation is omitted here.

The heat ray shielding resin sheet material having such multiple layers may be produced using, for example, a multi-layer hollow sheet manufacturing device. Therefore, the sheet layer can be formed in the aforementioned molding step. In this case, the heat ray shielding resin sheet material of the present embodiment may further include a laminating step in which the multiple sheet layers are laminated and connected by the connecting sheet layer.

Because the heat ray shielding resin sheet material obtained by the method of producing the heat ray shielding resin sheet material described above uses the near infrared absorbing material particles having excellent weather resistance, the weather resistance of the heat ray shielding resin sheet material is also excellent, and it becomes possible to stably shield heat rays over a long period of time.

### EXAMPLES

The present invention will be described more specifically below by way of Examples. The present invention should not be construed as being limited to these Examples.

### (Evaluation Method)

First, the evaluation method in the following Examples and Comparative Examples will be explained.

### (1) Visible Light Transmittance and Solar Radiation Transmittance

In each of the following Examples, the visible light transmittance and the solar radiation transmittance of the heat ray shielding resin sheet material were measured using a spectrophotometer U-4000 obtained from Hitachi, Ltd. and calculated in accordance with Japan Industrial Standards (JIS) R 3106 (2019). The solar radiation transmittance is an indicator of the heat ray shielding performance.

The solar radiation transmittance of the heat ray shielding resin sheet material was also measured after the heat resistance test and the wet heat resistance test. The change in the solar radiation transmittance before and after the heat resistance test is presented in Table 1 as the heat resistance ΔST. The change in the solar radiation transmittance before and after the heat resistance test is presented in Table 1 as the heat resistance ΔST. The rate of change in the solar radiation transmittance before and after each test, ΔST, was calculated according to (solar radiation transmittance after exposure) - (solar radiation transmittance before exposure).

### (2) Haze value

Haze value was measured according to JIS K 7105 (1981) using HR-200 obtained from Murakami Color Research Laboratory Co., Ltd.

### [Example 1]

Cs₂CO₃ (23.5 g) was dissolved in water (36 g), and the resulting product was added to H₂WO₄ (109 g). The resulting product was sufficiently stirred, and dried, to obtain a raw material mixture of Example 1 (raw material preparing step).

Next, using the raw material mixture prepared in the raw material preparing step, the hybrid plasma reactor 10 illustrated in FIG. 1 in which a direct-current plasma (direct-current arc plasma) and a high-frequency plasma were superimposed was used, to perform the reaction step.

First, the interior of the reaction system was vacuum-pumped by the vacuum pumping device 13 to approximately 0.1 Pa (approximately 0.001 torr), and then purged completely with an argon gas, to produce a 1-atm argon gas circulating system.

An argon gas of 8 L/min was flowed through the plasma generation gas feeding port 15, to generate a direct-current plasma. Here, the direct-current power supply input was 6 kW.

Moreover, as the gases for high-frequency plasma generation and quartz tube protection, an argon gas of 40 L/min and a hydrogen gas of 3 L/min were flowed spirally through the sheath gas introducing port 16 along the internal wall of the water-cooling quartz double tube 11, to generate a high-frequency plasma.

Here, the high-frequency power supply input was set to 45 kW. After the hybrid plasma was generated, with a mixture gas of an argon gas of 3 L/min and an oxygen gas of 0.01 L/min used as a carrier gas, the raw material mixture of Example 1 was fed into the plasma at a feeding rate of 2 g/min from the raw material powder feeding device 19.

As a result, the raw material evaporated momentarily and condensed at the plasma flame tail, to become minute particles. At the bottom of the reaction chamber 12, particles (cesium tungsten oxide particles a), which were the near infrared absorbing material particles, were recovered.

The particle diameter of the recovered cesium tungsten oxide particles a was measured by TEM observation. As a result, it was successfully confirmed that the particle diameters of evaluated thirty particles were 10 nm or more and 50 nm or less. The particle diameters were calculated, seeing the diameters of the minimum circumscribed circles of the evaluated particles as the particle diameters of the particles.

Quantitative analyses of Cs, W, and O from the recovered cesium tungsten oxide particles a found them to be 14.7wt%, 65.5wt%, 18.3wt%, respectively, and it was successfully confirmed that a chemical formula calculated from the quantitative analyses was Cs_{0.31}WO_{3.21}.

Cs was evaluated using a flame atomic absorption spectrometer (obtained from Varian Medical Systems, Inc., Model No. SpectrAA 220FS). W was evaluated using an ICP emission spectroscopic analyzer (obtained from Shimadzu Corporation, Model No. ICPE9000). O was evaluated using an oxygen/nitrogen simultaneous analyzer (obtained from LECO Corporation, Model No. ON836). The same applies to other Examples and Comparative Examples below.

An X-ray diffraction pattern of the cesium tungsten oxide particles a was measured using a powder X-ray diffractometer (X'Pert-PRO/MPD obtained from Malvern Panalytical Ltd. of Spectris Co., Ltd.) by powder X-ray diffractometry (Θ-2Θ method). Determination of a crystal structure of the compound contained in the cesium tungsten oxide particles a based on the obtained X-ray diffraction pattern confirmed the same peak as that of hexagonal Cs_{0.3}WO₃. As described, the crystal structure of an obtained complex tungsten oxide can be determined based on an X-ray diffraction pattern. In the present Example, the crystal structure of the compound contained in the particles of the complex tungsten oxide had the same peak as that of a similar hexagonal complex tungsten oxide. Hence, it was successfully confirmed that the crystal structure of the complex tungsten oxide obtained in the present Example, i.e., cesium tungsten oxide, was a hexagonal crystal.

Next, 5 mass% of the cesium tungsten oxide particle a, 5 mass% of an acrylic polymer dispersant (an acrylic dispersant with an amine value of 48 mg KOH/g and a decomposition temperature of 250°C) having a group containing an amine as a functional group, and 90 mass% of methyl isobutyl ketone were weighed. The weighed raw materials were then ground and dispersed in a paint shaker (obtained from Asada Iron Works Co. ,Ltd) containing 0.3 mm ϕ ZrO₂ beads for 6 hours to prepare an additive solution (solution A). Here, the dispersed particle diameter of cesium tungsten oxide particle a, which is the near infrared absorbing material particle, in the additive solution (solution A) was measured by a particle size measuring device (ELS-8000 obtained from Otsuka Electronics Co., Ltd.) based on a dynamic light scattering method and found to be 55 nm. After removing the solvent from the solution A, the X-ray diffraction pattern of cesium tungsten oxide particle, which is the near infrared absorbing material particle obtained from the solution A, was measured by the powder X-ray diffraction method (Θ-2Θ method) using the powder X-ray diffractometer (X'Pert-PRO/MPD obtained from Malvern Panalytical Ltd. of Spectris Co., Ltd.) and the crystal size was calculated using the Rietveld method. These evaluation results are presented in Table 1.

Next, the resulting additive solution (solution A) was added to polycarbonate resin so that the concentration of the cesium tungsten oxide particles a was 0.0274 mass%, mixed with a blender, melted and kneaded uniformly with a twin-screw extruder, and extruded to a thickness of 2 mm using a T-die. By extrusion molding, a heat ray shielding polycarbonate sheet material (Sample 1), which is a heat ray shielding resin sheet material in which the near infrared absorbing material particles are uniformly dispersed throughout the resin, was prepared.

The content of cesium tungsten oxide particles per 1 m² of the obtained heat ray shielding resin sheet material was 0.66 g. The specific gravity of the heat ray shielding resin sheet material was calculated as 1.2 g/cm³. The particle diameter of the cesium tungsten oxide particles in the heat ray shielding resin sheet material was confirmed to be in the range of 10 nm or more and 50 nm or less by TEM observation (transmission electron microscopy). The particle diameter of the cesium tungsten oxide particles, which are the near infrared absorbing material particles, is presented in the column of "particle diameter of complex tungsten oxide in heat ray shielding resin sheet material" in Table 1. In Table 1, "10 nm or more and 50 nm or less" is described as "10 to 50".

As presented in Table 1, when the visible light transmittance was 70.9%, the solar radiation transmittance was 50.8% and the haze value was 1.0%. The heat ray shielding resin sheet was exposed to an atmosphere of 85°C and 90% RH for 94 hours in an atmospheric environment to perform a wet and heat resistance test. The solar radiation transmittance was also measured on the heat ray shielding resin sheet after the wet and heat resistance test. As a result, the solar radiation transmittance was 50.8%, and the wet and heat resistance ΔST, which is the ratio of change in the solar radiation transmittance before and after the wet and heat resistance test, was 0.0%, confirming that the heat ray shielding resin sheet material obtained was excellent in the wet and heat resistance.

In addition, the heat ray shielding resin sheet material obtained was exposed to an atmosphere of 120°C for 125 hours in an atmospheric environment for the heat resistance test. The solar radiation transmittance of the heat ray shielding resin sheet for the wet and heat resistance test was also measured. As a result, the solar radiation transmittance was 50.5%, and the heat resistance, ΔST, which is the ratio of change in the solar radiation transmittance, was -0.3%, indicating excellent heat resistance.

### [Example 2]

Using a vacuum dryer, the organic solvent of the additive solution (A solution) prepared in Example 1 was removed to prepare a powder for a heat ray shielding resin sheet material (A powder). Next, the obtained powder (A powder) was added to a polycarbonate resin so that the concentration of the cesium tungsten oxide particles a was 0.0274 mass%, mixed with a blender, melted and kneaded uniformly with a twin-screw extruder, and extruded to a thickness of 2 mm using a T-die.

By extrusion molding, a heat ray shielding polycarbonate sheet material (Sample 2), which is a heat ray shielding resin sheet material in which the near infrared absorbing material particles are uniformly dispersed throughout the resin, was prepared.

Except for the above points, the same procedure as in Example 1 was performed to prepare a heat ray shielding resin sheet material, and the evaluation was performed. The evaluation results are presented in Table 1.

### [Example 3]

The additive solution (liquid A) prepared in Example 1 was added to a polycarbonate resin so that the concentration of the cesium tungsten oxide particles a was 0.0265 mass%, and, using a hollow three-layer sheet manufacturing die, each sheet layer was molded to a thickness of 0.7 mm and the overall thickness to 20 mm. The obtained heat ray shielding resin sheet material has the same cross-sectional shape as the heat ray shielding resin sheet material of the hollow three-layer structure illustrated in FIG. 3, and all sheet layers contain the cesium tungsten oxide particles a that are the near infrared absorbing material particles.

Except for the above points, the same procedure as in Example 1 was performed to prepare a heat ray shielding resin sheet material (Sample 3), and the evaluation was performed. The evaluation results are presented in Table 1.

### [Example 4]

The additive solution (solution A) prepared in Example 1 was added to a polycarbonate resin so that the concentration of the cesium tungsten oxide particles a was 1.1 mass%, mixed with a blender, melted and kneaded uniformly with a twin-screw extruder, and then coextruded to a thickness of 50 um on a polycarbonate sheet with a thickness of 2 mm. By coextrusion molding, a heat ray shielding polycarbonate laminate (Sample 4), which is a heat ray shielding resin sheet material laminate in which the near infrared absorbing material particles are uniformly dispersed in an upper layer with a thickness of 50 um, was prepared. Except for the above points, the same procedure as in Example 1 was performed to prepare a heat ray shielding resin sheet material laminate, and the evaluation was performed. The evaluation results are presented in Table 1.

### [Example 5]

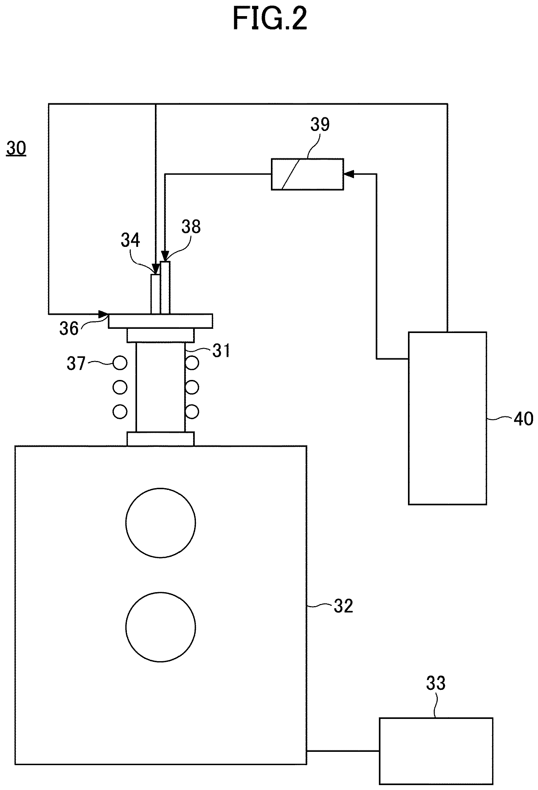

Using a high-frequency plasma reactor 30 illustrated in FIG. 2, near infrared absorbing material particles were prepared.

The high-frequency plasma reactor 30 includes a water-cooling quartz double tube 31, and a reaction chamber 32 coupled to the water-cooling quartz double tube 31. A vacuum pumping device 33 is coupled to the reaction chamber 32.

A plasma generation gas feeding port 34 is provided above the water-cooling quartz double tube 31.

It is possible to feed a sheath gas for high-frequency plasma generation and quartz tube protection along the internal wall of the water-cooling quartz double tube 31. A sheath gas introducing port 36 is provided in a flange above the water-cooling quartz double tube 31.

A water-cooling copper coil 37 for high-frequency plasma generation is provided around the water-cooling quartz double tube 31.

A raw material powder carrier gas feeding port 38 is provided near the plasma generation gas feeding port 34, and is coupled through a duct to a raw material powder feeding device 39 configured to feed a raw material powder.

The plasma generation gas feeding port 34, the sheath gas introducing port 36, and the raw material powder feeding device 39 are coupled to a gas feeding device 40 through ducts, and a predetermined gas can be fed to each member from the gas feeding device 40. Feeding ports may be provided in any portions other than the members described above and may be coupled to the gas feeding device 40, such that the members in the device can be cooled or put under a predetermined atmosphere.

In the present Example, first, an argon gas of 30 L/min was flowed through the plasma generation gas feeding port 34, and an argon gas and a hydrogen gas were mixed at a flow rate ratio of 40 L/min to 3 L/min and fed spirally through the sheath gas introducing port 36, to generate a high-frequency plasma. Here, the high-frequency power supply input was set to 45 kW.

Next, using a mixture gas of an argon gas of 3 L/min and an oxygen gas of 0.01 L/min as a carrier gas, the raw material mixture prepared in Example 1 was fed into the plasma at a rate of 2 g/min from the raw material powder feeding device 39.

As a result, the particle diameter of the near infrared absorbing material particles recovered at the bottom of the reaction chamber 32 was found to be 10 nm or greater and 50 nm or less by TEM observation.

An X-ray diffraction pattern of the obtained near infrared absorbing material particles of Example 5 was measured by powder X-ray diffractometry (Θ-2Θ method). Determination of a crystal structure contained in the particles based on the obtained X-ray diffraction pattern confirmed the same peak as that of hexagonal Cs_{0.3}WO₃.

Except that the obtained complex tungsten oxide particles, which are the near infrared absorbing material particles in Example 5, were used, the additive solution was prepared in the same manner as in Example 1, and then the heat ray shielding polycarbonate sheet material, which is the heat ray shielding resin sheet material in Example 5, was prepared. The evaluation results are presented in Table 1.

The dispersed particle diameter of the complex tungsten oxide particles, which are the near infrared absorbing material particles of the additive solution in Example 5, was 55 nm.

### [Example 6]

Except that a mixture gas of an argon gas of 5 L/min and an oxygen gas of 0.01 L/min was used as a carrier gas in Example 5, the same procedure as in Example 5 was performed, and a heat ray shielding resin sheet material was prepared and evaluated. The evaluation results are presented in Table 1.

The dispersed particle diameter of the complex tungsten oxide particles, which are the near infrared absorbing material particles of the additive solution in Example 6, was 54 nm.

### [Example 7]

Except that a mixture of 4 L/min of an argon gas and 0.01 L/min of an oxygen gas was used as a carrier gas in Example 1, the same procedure as in Example 1 was performed, and a heat ray shielding resin sheet material was prepared and evaluated. The evaluation results are presented in Table 1.

The dispersed particle diameter of the complex tungsten oxide particles, which are the near infrared absorbing material particles of the additive solution in Example 7, was 55 nm.

### [Example 8]

Except that, in preparing the raw material mixture, Na₂CO₃ and H₂WO₄ were weighed by a predetermined amount so that the molar ratio of W to Na was 1:0.50, and used, the same procedure as in Example 1 was performed to prepare a heat ray shielding resin sheet material, and the evaluation was performed. The evaluation results are presented in Table 1.

The dispersed particle diameter of the complex tungsten oxide particles, which are the near infrared absorbing material particles of the additive solution in Example 8, was 56 nm.

### [Example 9]

Except that, in preparing the raw material mixture, K₂CO₃ and H₂WO₄ were weighed by a predetermined amount so that the molar ratio of W to K was 1:0.33, and used, the same procedure as in Example 1 was performed to prepare a heat ray shielding resin sheet material, and the evaluation was performed. The evaluation results are presented in Table 1.

The dispersed particle diameter of the complex tungsten oxide particles, which are the near infrared absorbing material particles of the additive solution in Example 9, was 58 nm.

### [Example 10]

Except that, in preparing the raw material mixture, Rb₂CO₃ and H₂WO₄ were weighed by a predetermined amount so that the molar ratio of W to Rb was 1:0.30, and used, the same procedure as in Example 1 was performed to prepare a heat ray shielding resin sheet material, and the evaluation was performed. The evaluation results are presented in Table 1.

The dispersed particle diameter of the complex tungsten oxide particles, which are the near infrared absorbing material particles of the additive solution in Example 10, was 57 nm.

### [Example 11]

Except that, in preparing the raw material mixture, BaCO₃ and H₂WO₄ were weighed by a predetermined amount so that the molar ratio of W to Ba was 1:0.30, and used, the same procedure as in Example 1 was performed to prepare a heat ray shielding resin sheet material, and the evaluation was performed. The evaluation results are presented in Table 1.

The dispersed particle diameter of the complex tungsten oxide particles, which are the near infrared absorbing material particles of the additive solution in Example 11, was 60 nm.

### [Example 12]

Except that, in preparing the raw material mixture, In₂O₃ and H₂WO₄ were weighed by a predetermined amount so that the molar ratio of W to In was 1:0.30, and used, the same procedure as in Example 1 was performed to prepare a heat ray shielding resin sheet material, and the evaluation was performed. The evaluation results are presented in Table 1.

The dispersed particle diameter of the complex tungsten oxide particles, which are the near infrared absorbing material particles of the additive solution in Example 12, was 59 nm.

### [Example 13]

Except that, in preparing the raw material mixture, TlNO₃ and H₂WO₄ were weighed by a predetermined amount so that the molar ratio of W to Tl was 1:0.30, and used, the same procedure as in Example 1 was performed to prepare a heat ray shielding resin sheet material, and the evaluation was performed. The evaluation results are presented in Table 1.

The dispersed particle diameter of the complex tungsten oxide particles, which are the near infrared absorbing material particles of the additive solution in Example 13, was 62 nm.

### [Example 14]

Except that, in preparing the raw material mixture, K₂CO₃ and H₂WO₄ were weighed by a predetermined amount so that the molar ratio of W to K was 1:0.55, and used, the same procedure as in Example 1 was performed to prepare a heat ray shielding resin sheet material, and the evaluation was performed. The evaluation results are presented in Table 1.

The dispersed particle diameter of the complex tungsten oxide particles, which are the near infrared absorbing material particles of the additive solution in Example 14, was 57 nm.

### [Example 15]

Except that an acrylic resin was used instead of the polycarbonate resin, the same procedure as in Example 1 was performed to prepare a heat ray shielding resin sheet material, and the evaluation was performed. The evaluation results are presented in Table 1.

### [Comparative Example 1]

Cesium carbonate (Cs₂CO₃) (55.45 g) was dissolved in water (50 g), to obtain an aqueous solution. Tungstic acid (H₂WO₄) (286 g) was added to the aqueous solution. The resulting product was sufficiently stirred and mixed, and then dried. The mole ratio between W and Cs in the dried product was W:Cs=1:0.33.

The dried product was fired in a 5% H₂ gas atmosphere in which an N₂ gas was used as a carrier gas at 800°C for 5.5 hours. Subsequently, the gas to be fed was changed to only the N₂ gas, and the temperature was lowered to room temperature, to obtain cesium tungsten oxide particles, which were near infrared absorbing material particles of Comparative Example 1.

An X-ray diffraction pattern of the obtained near infrared absorbing material particles of Comparative Example 1 was measured by powder X-ray diffractometry (Θ-2Θ method). Determination of a crystal structure contained in the particles based on the obtained X-ray diffraction pattern confirmed the same peak as that of hexagonal Cs_{0.3}WO₃.

5 mass% of the near infrared absorbing material particles of Comparative Example 1, and 5 mass% of the acrylic polymer dispersant and 90 mass% of methyl isobutyl ketone, which were the same as in Example 1, were weighed and loaded into the paint shaker (obtained from Asada Iron Works Co. ,Ltd) containing 0.3 mm ϕ ZrO₂ beads, and ground and dispersed for 30 hours. Thus, an additive solution of Comparative Example 1 was prepared. The dispersed particle diameter of the complex tungsten oxide particles, which are the near infrared absorbing material particles in the additive solution, was 64 nm.

Except that the above additive solution was used, a heat ray shielding polycarbonate sheet material, which is the heat ray shielding resin sheet material in Comparative Example 1, was prepared in the same manner as Example 1. The evaluation results are presented in Table 1.

**[Table 1]**

| | CRYSTAL STRUCTURE | CHEMICAL FORMULA | DISPERSED PARTICLE DIAMETER [nm] | CRYSTAL-LITE SIZE [nm] | PARTICLE DIAMETER OF COMPLEX TUNGSTEN OXIDE IN HEAT RAY SHIELDING RESIN SHEET MATERIAL [nm] | VISIBLE LIGH TRANSMITTANCE [%] | SOLAR RADIATION TRANSMITTANCE [%] | HAZE [%] | WET AND HEAT RESISTANCE Δ ST [%] | HEAT RESISTANCE Δ ST [%] |
|---|---|---|---|---|---|---|---|---|---|---|
| EXAMPLE 1 | HEXAGONAL CRYSTAL | Cs_{0.31}WO_{3.21} | 55 | 16.9 | 10 to 50 | 70.9 | 50.8 | 1.0 | 0.0 | -0.3 |
| EXAMPLE 2 | HEXAGONAL CRYSTAL | Cs_{0.31}WO_{3.21} | SAME AS EXAMPLE 1 | | 10 to 50 | 70.0 | 50.3 | 1.1 | 0.0 | -0.2 |
| EXAMPLE 3 | HEXAGONAL CRYSTAL | Cs_{0.31}WO_{3.21} | SAME AS EXAMPLE 1 | | 10 to 50 | 60.9 | 43.8 | 2.5 | -0.1 | -0.2 |
| EXAMPLE 4 | HEXAGONAL CRYSTAL | Cs_{0.31}WO_{3.21} | SAME AS EXAMPLE 1 | | 10 to 50 | 70.5 | 50.5 | 1.1 | 0.0 | -0.3 |
| EXAMPLE 5 | HEXAGONAL CRYSTAL | Cs_{0.31}WO_{3.21} | 55 | 17.9 | 10 to 50 | 70.3 | 50.1 | 1.1 | 0.1 | -0.2 |
| EXAMPLE 6 | HEXAGONAL CRYSTAL | Cs_{0.29}WO_{3.03} | 54 | 19.5 | 10 to 50 | 70.1 | 50.2 | 1.0 | 0.1 | -0.2 |
| EXAMPLE 7 | HEXAGONAL CRYSTAL | Cs_{0.30}WO_{3.13} | 55 | 21.1 | 10 to 50 | 70.6 | 50.5 | 1.0 | -0.5 | -0.3 |
| EXAMPLE 8 | CUBIC CRYSTAL | Na_{0.50}WO_{3.12} | 56 | 16.9 | 10 to 50 | 74.0 | 65.2 | 1.1 | 0.3 | -0.3 |
| EXAMPLE 9 | HEXAGONAL CRYSTAL | K_{0.33}WO_{3.14} | 58 | 18.0 | 10 to 50 | 67.1 | 52.9 | 1.1 | -0.1 | -0.3 |
| EXAMPLE 10 | HEXAGONAL CRYSTAL | Rb_{0.30}WO_{3.10} | 57 | 17.2 | 10 to 50 | 75.0 | 57.8 | 1.1 | -0.1 | -0.2 |
| EXAMPLE 11 | HEXAGONAL CRYSTAL | Ba_{0.30}WO_{3.10} | 60 | 17.3 | 10 to 50 | 74.0 | 66.4 | 1.1 | 0.2 | -0.3 |
| EXAMPLE 12 | TETRAGONAL CRYSTAL | In_{O.30}WO_{3.11} | 59 | 18.0 | 10 to 50 | 64.2 | 54.1 | 1.1 | 0.3 | -0.2 |
| EXAMPLE 13 | HEXAGONAL CRYSTAL | TI_{0.30}WO_{3.10} | 62 | 18.5 | 10 to 50 | 70.1 | 51.7 | 1.1 | -0.2 | -0.3 |
| EXAMPLE 14 | TETRAGONAL CRYSTAL | K_{0.55}WO_{3.10} | 57 | 18.0 | 10 to 50 | 70.6 | 47.5 | 1.1 | 0.3 | -0.3 |
| EXAMPLE 15 | HEXAGONAL CRYSTAL | Cs_{0.31}WO_{3.21} | SAME AS EXAMPLE 1 | | 10 to 50 | 70.7 | 50.7 | 1.1 | 0.0 | -0.2 |
| COMPARATIVE EXAMPLE 1 | HEXAGONAL CRYSTAL | Cs_{0.32}WO_{2.65} | 64 | 9.2 | 10 to 50 | 71.0 | 48.0 | 1.1 | 1.0 | 1.2 |

### [Evaluation]

Based on the various properties listed in Table 1, when examining the solar radiation transmittance of the heat ray shielding resin sheet materials in Examples 1 to 15 and Comparative Example 1, the solar radiation transmittance at visible light transmittance of 75.0% or less was less than 67.0% in all cases.

It was also confirmed that the heat ray shielding resin sheet materials in Examples 1 to 15 had excellent weather resistance with both of the wet and heat resistance ΔST and the heat resistance ΔST of less than 1.0%. In contrast, it was confirmed that the heat ray shielding resin sheet material in Comparative Example 1 had both of the wet and heat resistance ΔST and the heat resistance ΔST of more than 1.0%.

That is, it was confirmed that the heat ray shielding resin sheet material of Examples 1 to 15 contained near infrared absorbing material particles with excellent weather resistance, and the resin sheet material also had excellent weather resistance.

The heat ray shielding resin sheet material has been described above by way of embodiments and Examples. The present invention is not limited to the embodiments and Examples described above. Various modifications and changes can be made within the scope of the spirit of the present invention described in the claims.

The present application claims priority under Japanese Patent Application No. 2020-215131 filed with the Japan Patent Office on December 24, 2020, and the entire contents of Japanese Patent Application No. 2020-215131 are incorporated herein by reference.

### DESCRIPTION OF THE REFERENCE NUMERALS

50, 60: heat ray shielding resin sheet material
501, 601: first outer surface
502, 602: second outer surface
51, 61: first surface sheet layer
52, 62: second surface sheet layer
53: intermediate sheet layer
63: first intermediate sheet layer
64: second intermediate sheet layer
65: third intermediate sheet layer
66: fourth intermediate sheet layer
54: connecting sheet layer
67: first connecting sheet layer
68: second connecting sheet layer

## Claims

1. A heat ray shielding resin sheet material comprising:
near infrared absorbing material particles; and
a resin,
wherein the near infrared absorbing material particles contain particles of a complex tungsten oxide represented by General Formula: MₓW_{y}O_{z} (where an element M is one or more elements selected from H, He, alkali metals, alkaline-earth metals, rare-earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I, W represents tungsten, O represents oxygen, 0.001≤x/y≤1, and 3.0<z/y).

2. The heat ray shielding resin sheet material according to claim 1,
wherein the element M includes one or more elements selected from Cs, Rb, K, Tl, In, Ba, Li, Ca, Sr, Fe, and Sn.

3. The heat ray shielding resin sheet material according to claim 1 or 2,
wherein the particles of the complex tungsten oxide contain a crystal having one or more crystal structures selected from a hexagonal crystal, a tetragonal crystal, and a cubic crystal.

4. The heat ray shielding resin sheet material according to any one of claims 1 to 3,
wherein a particle diameter of the near infrared absorbing material particles is 10 nm or more and 100 nm or less.

5. The heat ray shielding resin sheet material according to any one of claims 1 to 4,
wherein the resin is a polycarbonate resin or an acrylic resin.

6. The heat ray shielding resin sheet material according to any one of claims 1 to 5, wherein
the heat ray shielding resin sheet material includes a plurality of sheet layers containing at least the resin,
one or more of the sheet layers contain the near infrared absorbing material particles,
the sheet layers include a first surface sheet layer, a second surface sheet layer, an intermediate sheet layer, and a connecting sheet layer,
the first surface sheet layer, the intermediate sheet layer, and the second surface sheet layer are laminated in this order, and the connecting sheet layer connects between the first surface sheet layer, the intermediate sheet layer, and the second surface sheet layer,
the first surface sheet layer includes a first surface, which is an outer surface of the heat ray shielding resin sheet material,
the second surface sheet layer includes a second surface, which is an outer surface of the heat ray shielding resin sheet material located on an opposite side of the first surface, and
the heat ray shielding resin sheet material includes a void between the first surface sheet layer and the second surface sheet layer, and has a hollow multilayer structure.

7. The heat ray shielding resin sheet material according to claim 6,
wherein all the sheet layers contain the near infrared absorbing material particles.

8. The heat ray shielding resin sheet material according to claim 6,
wherein only one of the first surface sheet layer and the second surface sheet layer contains the near infrared absorbing material particles.

9. The heat ray shielding resin sheet material according to claim 6,
wherein only the first surface sheet layer and the second surface sheet layer contain the near infrared absorbing material particles.
